(19) Europäisches Patentamt
European Patent Office
Office européen des brevets

(11) **EP 2 822 148 B1**

(12) **EUROPEAN PATENT SPECIFICATION**

(45) Date of publication and mention of the grant of the patent:
**05.05.2021 Bulletin 2021/18**

(21) Application number: **13754095.1**

(22) Date of filing: **22.02.2013**

(51) Int Cl.:
*H02K 1/02* *(2006.01)*     *H02K 1/22* *(2006.01)*
*H02K 17/16* *(2006.01)*     *H01F 1/14* *(2006.01)*

(86) International application number:
**PCT/JP2013/001022**

(87) International publication number:
**WO 2013/128862 (06.09.2013 Gazette 2013/36)**

(54) **ROTOR FOR INDUCTION TORQUE MOTOR AND INDUCTION TORQUE MOTOR**

ROTOR FÜR INDUKTIONSDREHMOMENTMOTOR UND INDUKTIONSDREHMOMENTMOTOR

ROTOR POUR MOTEUR COUPLE À INDUCTION ET MOTEUR COUPLE À INDUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2012 JP 2012046018**

(43) Date of publication of application:
**07.01.2015 Bulletin 2015/02**

(73) Proprietor: **Kabushiki Kaisha Kobe Seiko Sho (Kobe Steel, Ltd.)**
**Kobe-Shi, Hyogo 651-8585 (JP)**

(72) Inventors:
 • **FUJII, Hideo**
  **Kobe-shi, Hyogo 651-2271 (JP)**
 • **INOUE, Kenichi**
  **Kobe-shi, Hyogo 651-2271 (JP)**
 • **KASAI, Shingo**
  **Kobe-shi, Hyogo 651-2271 (JP)**

 • **CHIBA, Masamichi**
  **Kobe-shi, Hyogo 657-0863 (JP)**

(74) Representative: **Müller-Boré & Partner**
**Patentanwälte PartG mbB**
**Friedenheimer Brücke 21**
**80639 München (DE)**

(56) References cited:
**EP-A2- 1 100 186**    **WO-A1-98/09365**
**JP-A- 2005 348 595**    **JP-A- 2005 348 595**
**JP-U- 3 117 110**    **US-A1- 2007 114 870**

 • **Masamichi Chiba: "Development Trends of Soft Magnetic Iron", KOBELCO TECHNOLOGY REVIEW, 30 December 2011 (2011-12-30), pages 46-51, XP055219827, Retrieved from the Internet: URL:http://www.kobelco.co.jp/english/ktr/p df/ktr_30/046-051.pdf [retrieved on 2015-10-09]**

**Description**

Technical Field

The present invention relates to a rotor for an induction torque motor and, in particular, to a rotor for an induction torque motor capable of increasing the performance (the efficiency) of the induction torque motor. The present invention further relates to an induction torque motor including the rotor for an induction torque motor.

Background Art

Motors that convert electrical energy into mechanical energy (electric motors or electric machinery) are used for a variety of purposes. In General, motors include a rotor that has a shaft and that rotates and a stator that interacts with the rotor. The rotor rotates due to a magnetic field that varies with rotation (a rotating magnetic field). The motors are generally classified into a synchronous motor and an induction motor (an asynchronous motor).

In synchronous motors, a rotor is attracted by a rotating magnetic field generated by a supplied alternating electric current and is driven into rotation. Thus, the synchronous motor rotates at a synchronous speed. Examples of a synchronous motor include a permanent magnet synchronous motor (a PM motor) that uses a permanent magnet as a rotor and a reluctance synchronous motor that uses, as a rotor, a material having a low reluctance (a low magnetic resistance) and temporarily functioning as a magnet (such as iron).

In the induction motors, an induction current is generated in a rotor, which is an electric conductor, due to a rotating magnetic field generated by a stator. Thus, rotation torque corresponding to slip is obtained. Examples of an induction motor include a single-phase induction motor that obtains rotation torque using a predetermined method at startup time and obtains the rotation torque using single-phase alternating current power after startup and a three-phase induction motor, such as a squirrel-cage rotor type three phase induction motor or a wound rotor type three phase induction motor, that obtains the rotation torque using three-phase alternating current power.

In addition, if motors are classified according to the torque characteristics, torque motors are one of the classes. Torque motors can provide angular displacement or rotation torque of the output shaft in accordance with the level of a supplied electric signal. For example, if a voltage is applied to a torque motor, the torque motor provides angular displacement that is proportional to the applied voltage. Alternatively, if, for example, an electric current is applied to a torque motor, the torque motor provides angular displacement that is proportional to the level of the applied electric current. Accordingly, torque motors are used in a control system that requires an accurate rotation stop position of the output shaft and an accurate rotation torque of the output shaft in response to an electric signal. Thus, torque motors are used in a variety of technical fields. Examples of torque motor include a torque motor having a configuration that is the same as the above-described PM synchronous motor (a synchronous torque motor described in, for example, PTL 1) and a torque motor having a configuration that is the same as the above-described induction motor (an induction torque motor described in, for example, NPL 1).

The torque motor described in PTL 1 includes a magnetic circuit formed from a solenoid and a pair of stators laterally extending from either end of the solenoid and a rotor that is disposed between circular arc portions each formed by one of the stators and that has a cylindrical magnet core. Upon receiving a magnetic force from the pair of stators excited by the solenoid, the rotor rotates.

In general, motors are expected to be compact or power-efficient. Accordingly, the performance (the efficiency) represented by a value obtained by dividing the output torque by the input power needs to be increased.

Citation List

Patent Literature

PTL 1: Japanese Unexamined Patent Application Publication No. 2006-204012

Non Patent Literature

NPL 1: FUJII ELECTRIC WORKS Co., Ltd., [Online], searched on September 12, 2011, available in the Internet at <URL: http://www.few.co.jp/products/p01.html> and <URL: http://www.few.co.jp/pdf/torque.pdf>

JP 2005-348595 A discloses a multiple-phase motor comprising a stator and a rotor, wherein the rotor comprises a shaft member and a cylindrical member concentrically connected to the shaft member, the cylindrical member being formed of a magnetic material having a specific electric resistivity of equal to or lower than 20 $\mu\Omega\cdot$cm and a relative permeability of equal to or higher than 1000.

Summary of Invention

Accordingly, the present invention is provided. It is an object of the present invention to provide an induction torque motor capable of further increasing the performance of the induction torque motor.

According to the present invention, an induction torque motor comprising: a stator and a rotor is provided, wherein the rotor includes a shaft member and a cylindrical member that is concentrically connected to the shaft member and that is formed of a soft magnetic material having a specific electric resistivity lower than or equal to 0.4 [$\mu\Omega\cdot$m] and a relative permeability higher than or equal to 1000 and lower than or equal to 50000. Thus, according to the present invention, the performance of the induction torque motor can be improved.

Further objects, features, and advantages of the present invention will become apparent from the following description of embodiments with reference to the attached drawings.

Brief Description of Drawings

[Fig. 1] Fig. 1 is a cross-sectional view of the structure of an induction torque motor according to an embodiment of the present invention.
[Fig. 2] Fig. 2 is a perspective view of the structure of a rotor of the induction torque motor.
[Fig. 3] Fig. 3 illustrates a relationship between the speed and the torque and a relationship between the speed and an electric current.
[Fig. 4] Fig. 4 illustrates a ratio of torque to loss (F/P) under a rotor stopped condition when the drive frequency is 60 [Hz] and a parameter a is 1000.
[Fig. 5] Fig. 5 illustrates the ratio of torque to loss (F/P) when the drive frequency is 60 [Hz] and the parameter a is 1500.
[Fig. 6] Fig. 6 illustrates the ratio of torque to loss (F/P) when the drive frequency is 60 [Hz] and the parameter a is 2500.
[Fig. 7] Fig. 7 illustrates the ratio of torque to loss (F/P) when the drive frequency is 1 [kHz] and the parameter a is 500.
[Fig. 8] Fig. 8 illustrates the ratio of torque to loss (F/P) when the drive frequency is 1 [kHz] and the parameter a is 2500.
[Fig. 9] Fig. 9 illustrates the ratio of torque to loss (F/P) when the drive frequency is 1 [kHz] and the parameter a is 6000.
[Fig. 10] Fig. 10 illustrates the result of analysis obtained for the induction torque motor when the drive frequency is 1 [kHz].
[Fig. 11] Fig. 11 illustrates the result of analysis obtained for the induction torque motor when the drive frequency is 60 [Hz].
[Fig. 12] Fig. 12 illustrates the results of analysis obtained for the induction torque motor when the depth is 2 mm and the width is 0.5 mm and, thus, the aspect ratio (= depth/width) is 4 and if a copper end ring is provided.

Description of Embodiments

An embodiment of the present invention is described below with reference to the accompanying drawings. Note that in the drawings, the configurations indicated by the same reference numeral are the same configuration and, therefore, description of the configuration is not repeated as needed. In addition, in the present specification, to collectively refer to such configurations, a reference numeral without a suffix is used. In contrast, if the configurations are individually identified, a reference numeral with a suffix is used.

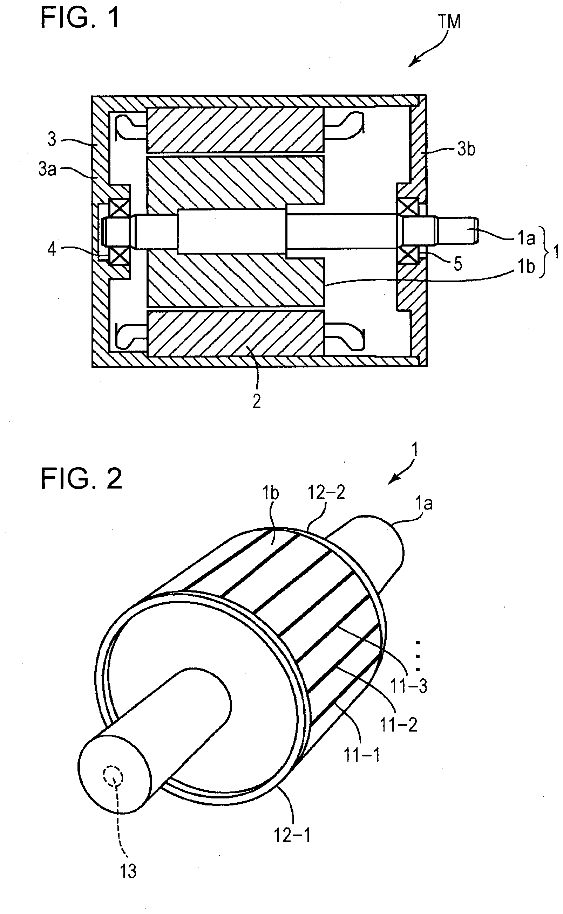

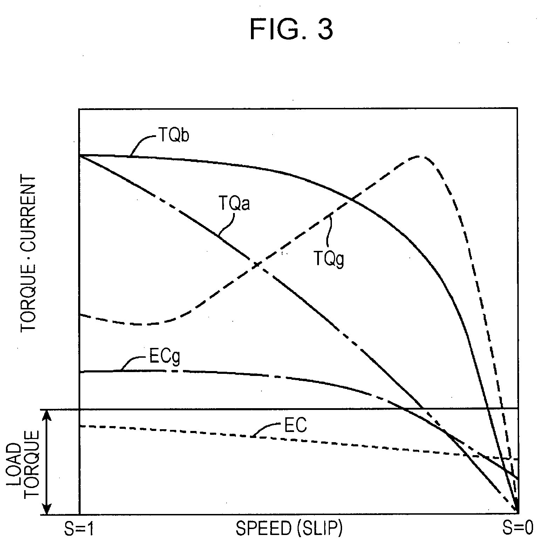

Fig. 1 is a cross-sectional view of the structure of an induction torque motor according to an embodiment. Fig. 2 is a perspective view of the structure of a rotor of the induction torque motor according to the embodiment. Fig. 3 illustrates a relationship between the speed and the torque and a relationship between the speed and an electric current. The abscissa of Fig. 3 represents the speed (a slip S). The ordinate of Fig. 3 represents the torque or the current. Note that if the slip S = 0, the induction torque motor is at a synchronous speed. In contrast, if the slip S = 1, the induction torque motor is at rest.

As illustrated in Fig. 1, an induction torque motor TM according to the present embodiment includes a rotor 1 that has an output shaft and that is rotatable and a stator 2 that interacts with the rotor 1. The induction torque motor TM rotates the rotor 1 by a magnetic field that rotationally varies (a rotating magnetic field). The induction torque motor TM has a configuration that is substantially the same as an induction motor. In addition, in the example illustrated in Fig. 1, the rotor 1 and the stator 2 are accommodated in a frame (a chassis) 3.

More specifically, the frame 3 includes a bottomed cylindrical casing 3a and a plate-like bracket 3b that is attached to the open end (the ceiling end) of the casing 3a and that closes the open end of the casing 3a. In addition, the rotor 1 and the stator 2 are coaxially disposed in the casing 3a. The stator 2 is fixed to the inner peripheral surface of the casing 3a, and the rotor 1 is disposed in a rotatable manner relative to the stator 2.

The stator 2 is substantially cylindrical in shape. For example, the stator 2 is formed by stacking a plurality of magnetic steel sheets. The cylindrical stator 2 includes an inner surface having a plurality of ridges (convex portions) each protruding inwardly in the radial direction and extending in the axis direction. The ridges are arranged at predetermined intervals in the circumferential direction. The stator 2 further includes a plurality of winding wires formed by winding a conductor wire coated by an insulator, such as an insulated covered copper wire, around each of the plurality of convex portions. Such winding wires and the convex portions form the magnetic poles. Thus, a predetermined number of the magnetic pole are formed (the number of magnetic poles is predetermined). In addition, as described above, the outer peripheral surface of the stator 2 is fixed to the inner peripheral surface of the casing 3a.

The rotor 1 includes a shaft member 1a having a shape of a rod (a bar or a columnar member) that serves as an output shaft and a cylindrical member 1b connected to the shaft member 1a so as to be concentric (coaxial) with the shaft center of the shaft member 1a. According to the present embodiment, the shaft center 1a is inserted into a through-hole formed so as to penetrate the shaft center of the cylindrical member 1b in the axis direction. The shaft center 1a is fixed to the cylindrical member 1b in the substantially middle region of the cylindrical member 1b.

In addition, one end of the shaft member 1a (the left end in Fig. 1) is rotatably supported by a bearing 4 attached to the casing 3a. The other end of the shaft member 1a (the right end in Fig. 1) is rotatably supported by a bearing 5 attached to the bracket 3b. To transfer the output to the outside of the frame 3, the shaft member 1a is disposed so as to pass through the bracket 3b and extend to the outside. In addition, as described above, the rotor 1 is disposed in the cylinder formed by the stator 2 so as to be coaxial with the stator 2 with a predetermined spacing between the outer peripheral surface of the rotor 1 and the inner peripheral surface of the stator 2 (a spacing in the radial direction).

Furthermore, the cylindrical member 1b of the rotor 1 is made of a soft magnetic material having a specific electric resistivity $\rho$ lower than or equal to 0.4 [$\mu\Omega\cdot$m] and a relative permeability $\mu$ higher than or equal to 1000 and lower than or equal to 50000 (in the range of 1000 to 50000) (i.e., $\rho \leq 0.4$ [$\mu\Omega\cdot$m], and $50000 \geq \mu \geq 1000$). Examples of such a soft magnetic material include extra low carbon Cold Heading wire (ELCH2) (an iron series soft magnetic material available from Kobe Steel, Ltd.), ELCH2S, LCA-1, and S10C. It is desirable that the soft magnetic material used for the cylindrical member 1b of the rotor 1 be the iron series soft magnetic material "ELCH2". The chemical composition of ELCH2, expressed in mass%, is 0.005% carbon (C), 0.004% silicon (Si), and 0.26% manganese (Mn). ELCH2 has a high flux density and a low magnetic coercive force. In addition, ELCH2 has a reduced specific electric resistivity lower than that of low carbon steel (C = 0.1%) by 30%, which is substantially the same as the specific electric resistivity of industrial nickel Ni.

Note that while the example illustrated in Fig. 1 has been described with reference to the shaft member 1a separated from the cylindrical member 1b, the shaft member 1a and the cylindrical member 1b may be integrated with each other.

In addition, according to the present embodiment, as illustrated in Fig. 2, the cylindrical member 1b further includes a plurality of concave groove portions 11 (11-1, 11-2, 11-3, ...) that are formed in the peripheral surface of the cylindrical member 1b and that extend parallel to the axis direction of the cylindrical member 1b. It is desirable that the depth of the concave groove portions 11 be greater than or equal to the skin depth $\delta(sf_0)$ and the aspect ratio (the depth/the width) be greater than or equal to 2.

Note that let s be the slip of the induction torque motor TM. Then, the skin depth $\delta(sf_0)$ can be expressed as:

$$\delta(sf_0) = (\rho/\pi\cdot s\cdot f_0\cdot \mu)^{1/2}$$

where $f_0$ [Hz] represents the drive frequency of the induction torque motor TM, $\mu$ represents the relative permeability of the cylindrical member 1b of the rotor 1, and $\rho$ [$\mu\Omega\cdot$m] represents the specific electric resistivity of the cylindrical member 1b of the rotor 1.

In addition, according to the present embodiment, as illustrated in Fig. 2, the cylindrical member 1b further includes a pair of circular ring members 12-1 and 12-2 made of a conductive material having a specific electric resistivity lower than or equal to 0.02 [$\mu\Omega\cdot$m]. The ring members 12-1 and 12-2 are disposed along the circumferential edge at either end of the cylindrical member 1b in the axis direction.

Furthermore, as illustrated by a dashed line in Fig. 2, to efficiently cool the shaft member 1a, the shaft member 1a may further has a through-hole 13 formed so as to pass through the shaft center of the shaft member 1a in the axis direction. By allowing coolant, such as gas (e.g., air) or liquid (e.g., water), to pass through the through-hole 13, the rotor 1 and, thus, the induction torque motor TM can be cooled. Note that in such a case, a through-hole is formed in the bottom portion of the casing 3a to circulate the coolant.

As can be seen from a dashed line indicating a torque TQg of a general-purpose motor in Fig. 3, if a widely used squirrel-cage rotor type induction motor is driven with a constant voltage and a constant frequency, the torque slightly drops (decreases) from the startup torque level and, thereafter, rises (increases) with increasing speed from the stationary state. The torque reaches its peak at about 80% of the synchronous speed (the maximum torque) and, thereafter, the torque drops (decreases). Subsequently, the speed becomes constant at a point at which the load torque is the same as the torque of the motor. In addition, as can be seen from an alternate long and short dash line indicating an electric current ECg of a general-purpose motor in Fig. 3, the electric current is substantially constant at the startup level from the stationary state to a point at which the slip S reaches about 0.5. Thereafter, the electric current ECg gradually drops (decreases) from the startup level with increasing speed. The electric current ECg flows even in a no-load state (the slip S = 0).

In contrast, in the induction torque motor TM, as the electric current is gradually decreased from the startup current level, as can be seen from a dashed line indicating an electric current EC of the torque motor in Fig. 3, the torque linearly drops in proportion to the current level, as can be seen from an alternate long and two short dashes line indicating a torque TQa of a torque motor A in Fig. 3. Alternatively, the torque drops in a convex curve in a predetermined relationship with the current level, as can be seen from a solid line indicating a torque TQb of a torque motor B in Fig. 3. As described above, the rotation torque of the induction torque motor TM can be obtained in accordance with the supplied current level.

In addition, since, in the induction torque motor TM according to the present embodiment, the cylindrical member 1b of the rotor 1 is made of a soft magnetic material having a specific electric resistivity $\rho$ lower than or equal to 0.4 [$\mu\Omega \cdot m$] and a relative permeability $\mu$ higher than or equal to 1000 and lower than or equal to 50000, the performance (the efficiency) can be increased more. The increase in the performance is described in more detail below.

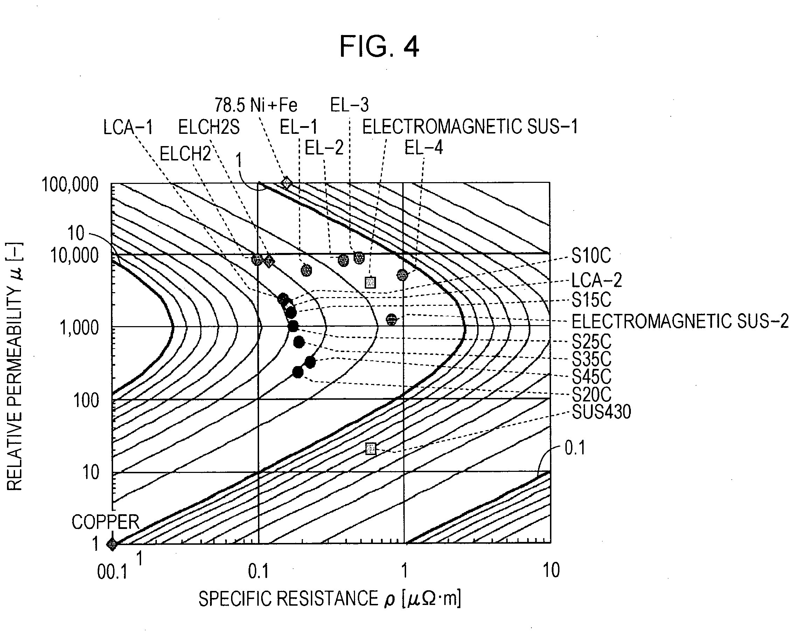

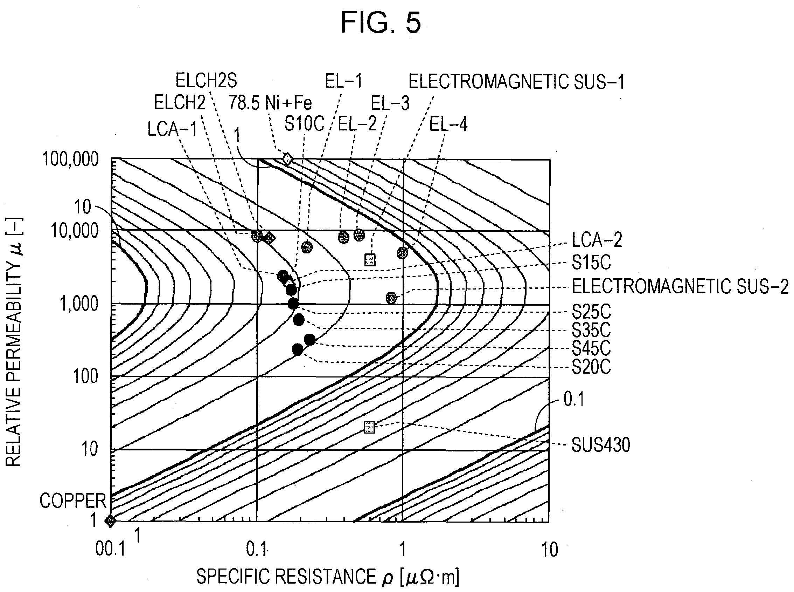

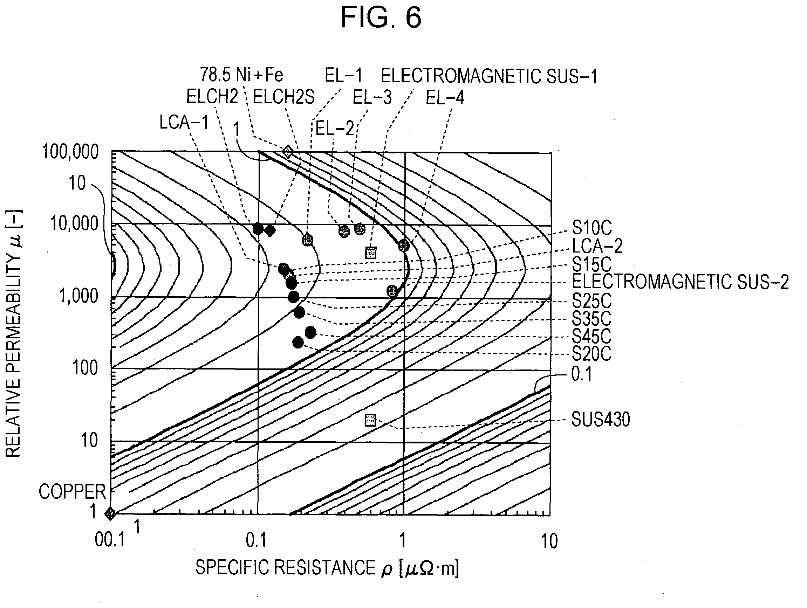

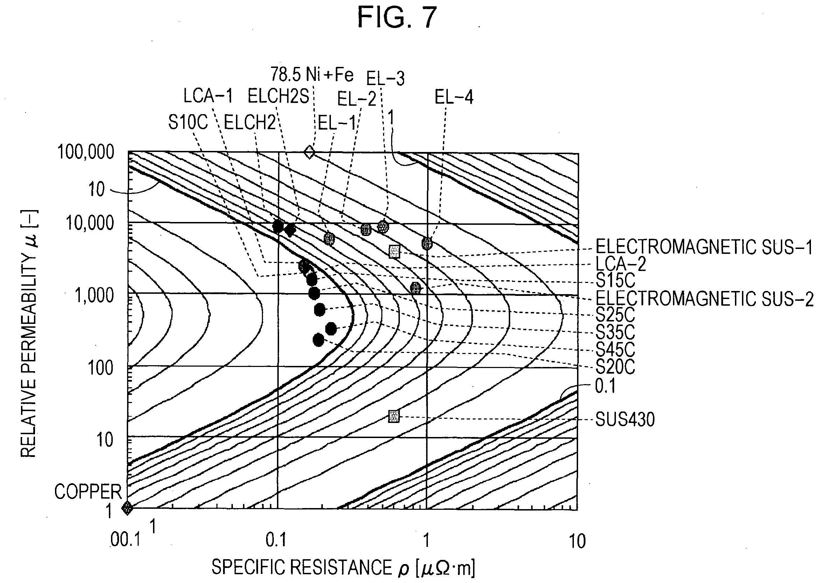

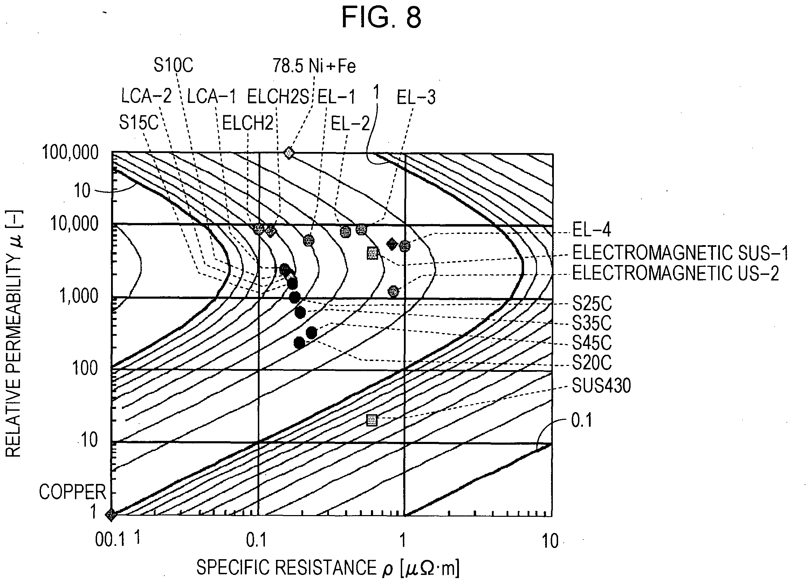

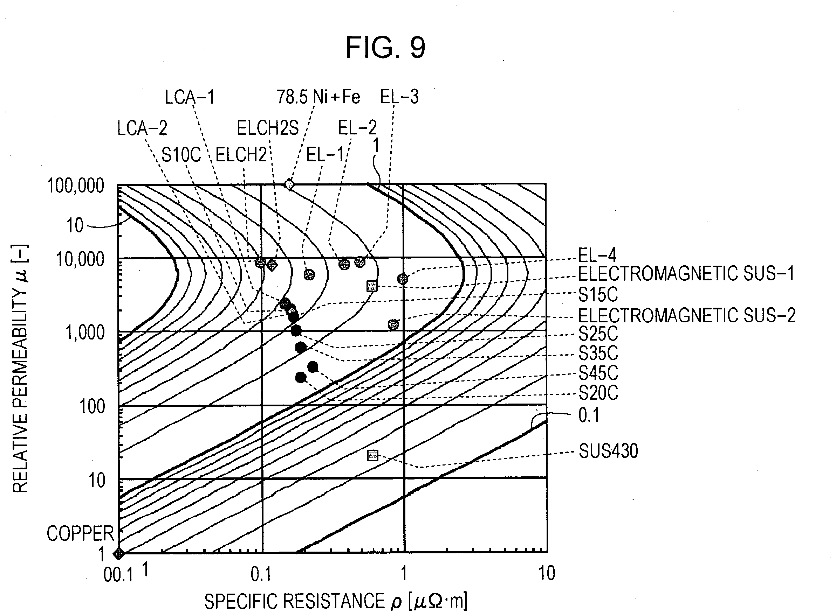

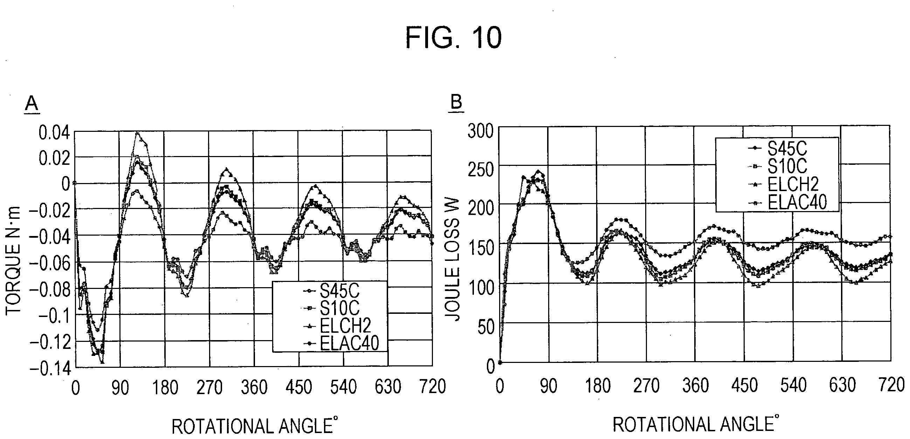

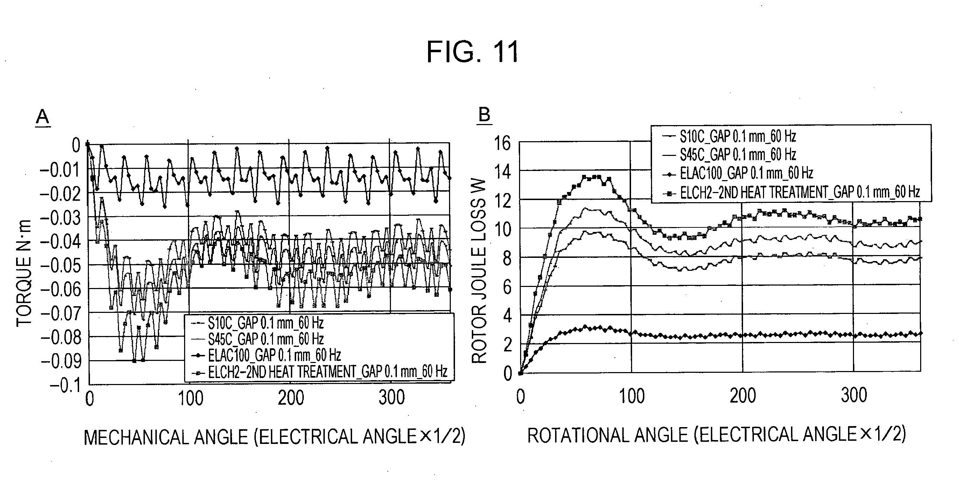

Fig. 4 illustrates the ratio of torque to loss (F/P) when the drive frequency is 60 [Hz] under a rotor stopped condition and a parameter a is 1000. Fig. 5 illustrates the ratio of torque to loss (F/P) when the drive frequency is 60 [Hz] and the parameter a is 1500. Fig. 6 illustrates the ratio of torque to loss (F/P) when the drive frequency is 60 [Hz] and the parameter a is 2500. Fig. 7 illustrates the ratio of torque to loss (F/P) when the drive frequency is 1 [kHz] and the parameter a is 500. Fig. 8 illustrates the ratio of torque to loss (F/P) when the drive frequency is 1 [kHz] and the parameter a is 2500. Fig. 9 illustrates the ratio of torque to loss (F/P) when the drive frequency is 1 [kHz] and the parameter a is 6000. In Figs. 4 to 9, the abscissa represents the specific electric resistivity $\rho$ expressed in $\mu\Omega \cdot m$, and the ordinate represents the non-dimensional [-] relative permeability $\mu$. Note that in Figs. 4 to 9, the ratio of torque to loss (F/P) for the induction torque motor TM including a roller having a structure without the concave groove portions and the circular ring members is illustrated. Fig. 10 illustrates the result of analysis obtained when the drive frequency is 1 [kHz]. Fig. 10A illustrates the result of analysis of the torque with respect to a rotational angle, and Fig. 10B illustrates the Joule loss with respect to a rotational angle. In Fig. 10A, the abscissa represents the rotational angle expressed in degree (°), and the ordinate represents the torque expressed in Nm. In Fig. 10B, the abscissa represents the rotational angle expressed in degree (°), and the ordinate represents the Joule loss expressed in W. Fig. 11 illustrates the result of analysis obtained when the drive frequency is 60 [Hz]. Fig. 11A illustrates the result of analysis of the torque with respect to a mechanical angle (an electrical angle × 1/2). Fig. 11B illustrates the rotor Joule loss with respect to a rotational angle (an electrical angle × 1/2). In Fig. 11A, the abscissa represents the mechanical degree expressed in degree (°), and the ordinate represents the torque expressed in Nm. In Fig. 11B, the abscissa represents the rotational angle expressed in degree (°), and the ordinate represents the rotor Joule loss expressed in W.

In Figs. 4 to 9, each of the solid lines is the curved line of equal performance. The curved line of equal performance is formed from the points that provide the same performance (the efficiency) in the specific electric resistivity $\rho$ - relative permeability $\mu$ space. In Figs. 4 to 9, the line of equal performance is given by the ratio of torque to loss (T/P).

Let $i_{eddy}(x)$ be the eddy current density in the cylindrical member 1b of the rotor 1 of the above-described induction torque motor TM, and let B(x) be the magnetic flux density in the cylindrical member 1b. Then, the following equations can be obtained:

$$i_{eddy}(x) = (I_0/\delta) \cdot \exp(-(x/\delta)) \quad \ldots (1)$$

$$B(x) = B_0(x) \cdot \exp(-(x/\delta)) \quad \ldots (2)$$

where x represents the coordinate system directed toward the shaft center in the radial direction when the outer peripheral surface of the cylindrical member 1b is defined as "0", $I_0$ represents the supplied external drive current, Bo(x) represents the magnetic flux density obtained when an external drive current $I_0$ is supplied, and $\delta$ represents the above-described skin depth ($\delta(sf_0) = (\rho/\pi \cdot s \cdot f_0 \cdot \mu)^{1/2}$).

In addition, for the eddy current density $i_{eddy}(x)$ and the magnetic flux density B(x), the following equations can be obtained:

$$\int i_{eddy}(x)dx = I_0 \quad \ldots (3),$$

and

$$B_0 = B_0(\mu) = L(\mu) \cdot I_0 \propto (1/(1 + a/\mu)) \cdot I_0 \qquad \dots (4).$$

Note that equation (3) indicates that the eddy current density is normalized by the external drive current $I_0$. In addition, the integral range of equation (3) is from (x = 0 to ∞ (infinity)), the expression "A ∝ B" in equation (4) indicates that A is proportional to B, $\mu$ represents the relative permeability of the cylindrical member 1b of the rotor 1, L [H] represents the inductance, and a represents a parameter regarding the distance G [m] between the outer peripheral surface of the cylindrical member 1b of the rotor 1 and the inner peripheral surface of the stator 2 (the spacing in the radial direction). The parameter a and the distance G have a seesaw relationship. If the distance G is small, the parameter a is relatively large. In contrast, if the distance G is large, the parameter a is relatively small. That is, the parameter a is inversely proportional to the distance G (a ∝ 1/G). Note that the parameter a is effected by the structure and the magnetic property of the stator 2 in addition to the distance G. The parameter a is used as the index indicating the quality of a motor magnetic circuit.

A Lorentz force $f_L(x)$ acting on a microvolume in the rotor 1 is given as follows:

$$f_L(x) = i_{eddy}(x) \times B(x) \qquad \dots (5)$$

Torque T can be obtained by integrating equation (5) over the entire area of the rotor 1 as follows:

$$T = \int i_{eddy}(x) \times B(x)dx = ((I_0 \cdot B_0(\mu)/\delta)) \cdot \int \exp(-2 \cdot (x/\delta))dx$$

$$= (I_0 \cdot B_0(\mu)/2) = (L(\mu) \cdot I_0^2/2) \qquad \dots (6).$$

Note that each of the integral ranges of equation (6) is (from x = 0 to ∞ (infinity)).

Like the torque T, an eddy current loss P in the rotor 1 can be obtained as follows:

$$P = \int \rho \cdot i_{eddy}^2(x)dx = (\rho/\delta) \cdot (I_0^2/2) \qquad \dots (7)$$

Note that each of the integral ranges of equation (7) is from (x = 0 to ∞ (infinity)).

Accordingly, from equations (6) and (7), the torque per "loss/slip" of the induction torque motor is given as follows:

$$T/(P/sf_0) = L(\mu) \cdot (\delta(sf_0)/\rho) \cdot sf_0$$

$$= (1/(1+a/\mu)) \cdot (\delta(sf_0)/\rho) \qquad \dots (8)$$

The results of simulation using the equation under a variety of conditions (the results of numerical analysis) are illustrated in Figs. 4 to 9. In Figs. 4 to 6, the drive frequency is set to a commercial frequency of 60 Hz. Fig. 4 illustrates the results when the parameter a is 1000 (a = 1000). Fig. 4 illustrates the results when the parameter a is 1000 (a = 1000). Fig. 5 illustrates the results when the parameter a is 1500 (a = 1500). Fig. 6 illustrates the results when the parameter a is 2500 (a = 2500). In addition, in Figs. 7 to 9, the drive frequency is 1 kHz. Fig. 7 illustrates the results when the parameter a is 500 (a = 500). Fig. 8 illustrates the results when the parameter a is 2500 (a = 2500). Fig. 9 illustrates the results when the parameter a is 6000 (a = 6000). The symbols in Figs. 4 to 9 indicate the soft magnetic materials having a chemical composition described below. The points in Figs. 4 to 9 indicate the simulation results when the rotor 1 is made of such soft magnetic materials. In addition, the curved lines in Figs. 4 to 9 represent curved lines of equal performance indicated by equation (8). The order of magnitude of the value indicated by the curved line increases as the thickness of the curved line increases.

The chemical composition (mass%) of each of the soft magnetic materials is illustrated in the following tables 1 to 3.

[Table 1]

| <ULTRALOW CARBON SERIES> | | | | (mass%) |
|---|---|---|---|---|
| MATERIAL | C | Si | Mn | ADDED (INCREASED) ELEMENT |
| ELCH2 | 0.005 | 0.004 | 0.25 | - |
| ELCH2S | 0.005 | 0.004 | 0.26 | S |
| EL-1 | 0.003 | 0.70 | 0.28 | - |
| EL-2 | 0.005 | 2.00 | 0.27 | Cr |
| EL-3 | 0.006 | 2.49 | 0.27 | Al |
| EL-4 | 0.021 | 2.46 | 0.49 | Cu, Cr, Al |

[Table 2]

| <SUS SERIES> | | | | (mass%) |
|---|---|---|---|---|
| MATERIAL | C | Si | Mn | ADDED (INCREASED) ELEMENT |
| SUS430 | 0.04 | 0.25 | 0.55 | Ni, Cr |
| ELECTROMAGNETIC SUS-1 | 0.010 | 1.0 | 0.20 | Cu, Ni, Cr, Mo, Al |
| ELECTROMAGNETIC SUS-2 | 0.007 | 3.0 | 0.31 | Cr, Al, Ti, Ca |

[Table 3]

| <LOW CARBON SERIES> | | | | (mass%) |
|---|---|---|---|---|
| MATERIAL | C | Si | Mn | ADDED (INCREASED) ELEMENT |
| S10C | 0.11 | 0.17 | 0.43 | - |
| S15C | 0.15 | 0.16 | 0.42 | - |
| S20C | 0.20 | 0.15 | 0.42 | - |
| S25C | 0.26 | 0.18 | 0.42 | - |
| S35C | 0.36 | 0.22 | 0.72 | - |
| S45C | 0.47 | 0.18 | 0.73 | - |
| LCA-1 | 0.05 | 0.03 | 0.30 | Al |
| LCA-2 | 0.15 | 0.02 | 0.34 | Al, Cr, B |

Note that the simulation result for S20C is obtained using the specific electric resistivity and the magnetic permeability when magnetic annealing is not performed. In addition, SUS430 is ferrite based.

As can be seen from Figs. 4 to 9, in the specific electric resistivity $\rho$ - relative permeability $\mu$ space, the performance (the efficiency) increases toward the upper left. That is, the performance (the efficiency) increases with decreasing specific electric resistivity $\rho$ and with increasing relative permeability. In addition, as can be seen from Figs. 4 to 6 which illustrate the results when the parameter a is 1000, 1500, and 2500 and, in particular, as can be seen from Fig. 5, the soft magnetic materials having a specific electric resistivity lower than or equal to 0.4 [$\mu\Omega\cdot$m] and a relative permeability higher than or equal to 1000 and lower than or equal to 50000 are present in substantially the same performance curved line. Accordingly, from the simulation result, it is desirable that the rotor of an induction torque motor be made of a soft magnetic material having a specific electric resistivity lower than or equal to 0.4 [$\mu\Omega\cdot$m] and a relative permeability higher than or equal to 1000 and lower than or equal to 50000. The simulation result illustrated in Figs. 4 to 9 indicates that such a soft magnetic material having a specific electric resistivity lower than or equal to 0.4 [$\mu\Omega\cdot$m] and a relative permeability higher than or equal to 1000 and lower than or equal to 50000 is ELCH2, ELCH2S, LCA-1, LCA-2, S10C, S15C, or S25C. It is more desirable that the specific electric resistivity be lower than or equal to 0.3 [$\mu\Omega\cdot$m], and it is still more desirable that the specific electric resistivity be lower than or equal to 0.2 [$\mu\Omega\cdot$m]. In addition, it is more desirable that the relative permeability be higher than or equal to 2000 and lower than or equal to 20000, and it is still more desirable that the relative permeability be higher than or equal to 3000 and lower than or equal to 10000.

In addition, as can be seen from a comparison of Fig. 7 and Fig. 9, the impact of a difference between the properties of the soft magnetic materials on the performance depends on the parameter a. If the parameter a is relatively small, the distance (the spacing in the radial direction) G between the outer peripheral surface of the cylindrical member 1b of the rotor 1 and the inner peripheral surface of the stator 2 is large and, thus, the property of the soft magnetic material that forms the cylindrical member 1b does not significantly influence the performance. In contrast, if the parameter a is relatively large, the distance (the spacing in the radial direction) G between the outer peripheral surface of the cylindrical member 1b of the rotor 1 and the inner peripheral surface of the stator 2 is small and, thus, the property of the soft magnetic material that forms the cylindrical member 1b significantly influence the performance. Accordingly, as illustrated in Figs. 4 to 6, it is desirable that the parameter a be at least in the range of $1000 \leq a \leq 2500$. Furthermore, as can be seen from Fig. 9, if the cylindrical member 1b is made of ELCH2, the performance is maximized. Thus, it is more desirable that the soft magnetic material used to form the cylindrical member 1b of the rotor 1 be an iron soft magnetic material (i.e., ELCH2).

Figs. 10 and 11 illustrate the simulation results when the drive frequency are 1 kHz and 60 kHz, respectively. In Fig. 10, the gap (the distance) between the stator 2 and the rotor 1 is 0.15 mm and a = 1500. In Fig. 11, the gap (the distance) between the stator 2 and the rotor 1 is 0.1 mm and a = 2500. As can be seen from Figs. 10 and 11, a ratio obtained by dividing the maximum torque by the rotor Joule loss (referred to as "ratio of torque to loss") is the highest for ELCH2 and is the second highest for S10C. Accordingly, it is desirable that the magnetic material have a specific electric resistivity lower than or equal to 0.4 [$\mu\Omega\cdot$m] and a relative permeability higher than or equal to 1000 and lower than or equal to 50000. In addition, if the drive frequency of 1kHz, which is higher than 60 Hz, improves the ratio of torque to loss more.

In addition, according to the present embodiment, the cylindrical member 1b of the rotor 1 of the induction torque motor TM has a plurality of concave groove portions 11 that are formed in the peripheral surface of the cylindrical member 1b and that extend parallel to the axis direction of the cylindrical member 1b. By including the plurality of concave groove portions 11 in this manner, the rotor 1 of the induction torque motor TM according to the present embodiment can regulate an area in which an eddy current flows. As a result, a squirrel-cage property can be provided to the cylindrical member 1b. Accordingly, unlike the torque property of a rotor without the concave groove portions 11 such that the torque decreases substantially in proportion to a decrease in the eddy current (an increase in speed) (refer to the torque property of the torque motor A illustrated in Fig. 3), a torque property such that the torque gently decreases with decreasing eddy current (increasing speed) in a range from the starting point to a point at which the current (the speed) reaches a predetermined value and the torque relatively rapidly decreases with decreasing eddy current (increasing speed) in a range in which the eddy current (the speed) exceeds the predetermined value (refer to the torque property of the torque motor B illustrated in Fig. 3) can be provided to an induction torque motor including the rotor 1. That is, when the induction torque motor TM is achieved, the rotor 1 of the induction torque motor TM having such a configuration can maintain the torque at a substantially constant level even when a few slip occurs.

In addition, in the rotor 1 of the induction torque motor TM according to the present embodiment, the depth of the concave groove portions 11 is greater than or equal to the skin depth $\delta(sf_0)$, and the aspect ratio (the depth/the width) is greater than or equal to 2.

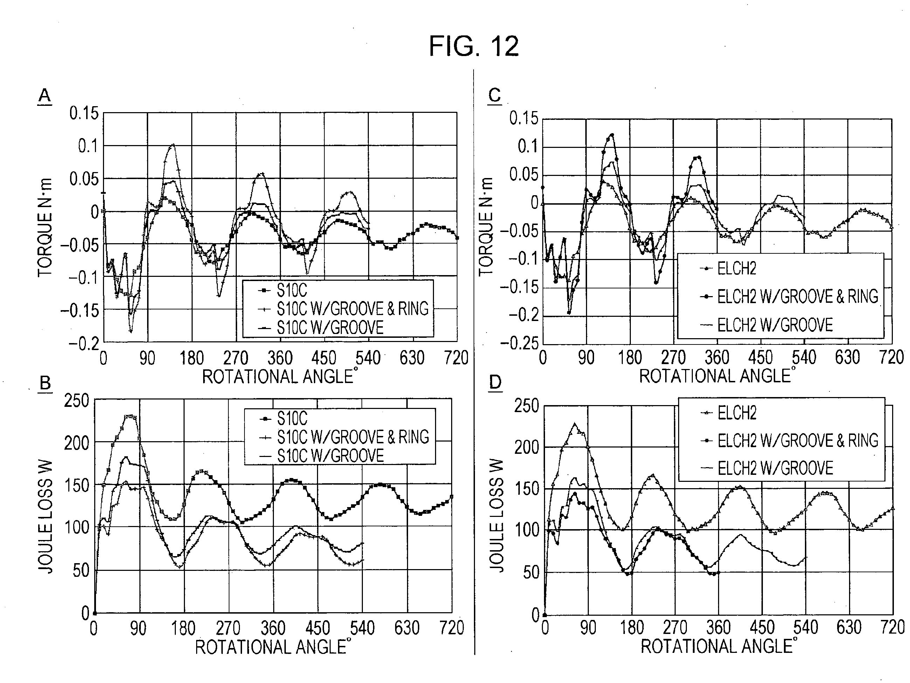

Fig. 12 illustrates the results of analysis when the depth is 2 mm and the width is 0.5 mm and, thus, the aspect ratio (= depth/width) is 4 and when a copper end ring is provided. Fig. 12A illustrates the result of analysis of the torque with respect to the rotational angle for S10C. Fig. 12B illustrates the Joule loss with respect to the rotational angle for S10C. Fig. 12C illustrates the result of analysis of the torque with respect to the rotational angle for ELCH2. Fig. 12D illustrates the Joule loss with respect to the rotational angle for ELCH2. In Figs. 12A and 12C, the abscissa represents the rotational angle expressed in degree (°), and the ordinate represents the torque expressed in Nm. In Figs. 12B and 12D, the abscissa represents the rotational angle expressed in degree (°), and the ordinate represents the Joule loss expressed in W. The size of the above-described copper end ring, which is an example of the circular ring member 12, is 14.9 mm in external radius (the same as the rotor external radius), is 12.0 mm in internal radius, and is 3.0 mm in height.

As indicated by the result in Fig. 12, by providing the concave groove portions 11 having an aspect ratio greater than or equal to 2, the rotor 1 of the induction torque motor TM according to the present embodiment can reliably regulate an area in which an eddy current flows.

In addition, in the rotor 1 of the induction torque motor TM according to the present embodiment, the cylindrical member 1b includes the pair of circular ring members 12-1 and 12-2 formed along the circumferential edge at either end of the cylindrical member 1b in the axis direction. The circular ring members 12-1 and 12-2 are made of a conductive material having a specific electric resistivity lower than or equal to 0.02 [$\mu\Omega\cdot$m]. Accordingly, by further including the circular ring members 12 made of a relatively good conductor, the rotor 1 of the induction torque motor TM according to the present embodiment can reliably maintain a flow path of the eddy current at either end of the rotor 1 and, thus, the eddy current is enabled to efficiently flow. As a result, an excellent performance can be provided.

In addition, the above-described magnetic property, such as magnetic permeability, can be obtained by producing a ring-shaped sample having, for example, an external radius of 18 mm × an internal radius of 10 mm using a wire material of each of the compositions, performing magnetic annealing (or intentionally eliminating the need for magnetic annealing to reduce the number of steps), winding a magnetic field applying coil and a magnetic flux detecting coil around the sample, and measuring the B-H curved line using an automatic magnetization measuring apparatus.

The present specification describes the variety of techniques mentioned above. The primary technologies among the above-described technologies are summarized below.

According to an embodiment, the rotor of the induction torque motor includes a shaft member and a cylindrical member that is connected to the shaft member so as to be concentric with the shaft center of the shaft member and that is made of a soft magnetic material having a specific electric resistivity lower than or equal to 0.4 [$\mu\Omega \cdot m$] and a relative permeability higher than or equal to 1000 and lower than or equal to 50000.

The results of simulation analysis for the induction torque motor indicates that a soft magnetic material having a specific electric resistivity lower than or equal to 0.4 [$\mu\Omega \cdot m$] and a relative permeability higher than or equal to 1000 and lower than or equal to 50000 (in the range of 1000 to 50000) is located in the best section of a curved line of equal performance, unlike the other soft magnetic materials. As used herein, the term "curved line of equal performance" refers to a line formed by a set of points that provide the same performance in the specific electric resistivity - relative permeability space. Accordingly, since such a rotor for the induction torque motor includes a cylindrical member made of a soft magnetic material having a specific electric resistivity lower than or equal to 0.4 [$\mu\Omega \cdot m$] and a relative permeability higher than or equal to 1000 and lower than or equal to 50000, the performance of the induction torque motor including the rotor can be more improved than that of an induction torque motor having a rotor including a cylindrical member made of another soft magnetic material.

In addition, according to the embodiment, in the above-described induction torque motor, let T [N·m] be the torque of the induction torque motor, let P [W/kg] be the eddy current loss of the rotor, let s be the slip of the induction torque motor, let $f_0$ [Hz] be the drive frequency of the induction torque motor, let $\rho$ [$\mu\Omega \cdot m$] be the specific electric resistivity of the soft magnetic material, let $\mu$ be the relative permeability of the soft magnetic material, and let $\delta(sf_0)$ [m] be the skin depth of the cylindrical member at a drive frequency of $f_0$. Then, when the torque T per "loss P/slip $sf_0$" is expressed as follows:

$$T/(P/sf_0) \propto 1/(1 + a/\mu) \cdot (\delta(sf_0)/\rho) \quad ... (C1)$$

where the symbol $\propto$ in expression "A $\propto$ B" indicates that A is proportional to B. At that time, the parameter a in equation C1 is in the range of $1000 \leq a \leq 2500$.

In such an induction torque motor, since the parameter a in equation C1 is in the range $1000 \leq a \leq 2500$, the induction torque motor including the rotor can more reliably reflect the property of the soft magnetic material that constitutes the cylindrical member to the torque property and, thus, the performance of the induction torque motor can be more reliably improved.

In addition, according to another embodiment, in the above-described induction torque motor, the cylindrical member further has a plurality of concave groove portions that are formed in a peripheral surface of the cylindrical member and that extend parallel to the axis direction of the cylindrical member.

By including the plurality of concave groove portions, such an induction torque motor can regulate an area in which an eddy current flows. As a result, a squirrel-cage property can be provided to the cylindrical member. Accordingly, unlike the torque property of a rotor without the concave groove portions such that the torque decreases substantially in proportion to a decrease in the eddy current (an increase in speed), the rotor for an induction torque motor can provide the following torque property, that is, a torque property such that the torque gently decreases with decreasing eddy current (increasing speed) in a range from the starting point to a point at which the eddy current (the speed) reaches a predetermined value and the torque relatively rapidly decreases with decreasing eddy current (increasing speed) in a range in which the eddy current (the speed) exceeds the predetermined value. That is, when an induction torque motor is achieved, such a configuration can maintain the torque at a substantially constant level even when a few slip occurs.

In addition, according to yet still another embodiment, in the above-described induction torque motors, the depth of the concave groove portions is greater than or equal to the skin depth $\delta(sf_0)$, and the aspect ratio (the depth/the width) is greater than or equal to 2.

Since the rotor of such an induction torque motor has the concave groove portions having such a shape, an area in which an eddy current flows can be more reliably regulated.

In addition, according to yet still another embodiment, the rotor of the above-described induction torque motor further includes the pair of circular ring members made of a conductive material having a specific electric resistivity lower than or equal to 0.02 [$\mu\Omega \cdot m$]. The ring members are disposed along the circumferential edges at either end of the cylindrical member in the axis direction.

Since the rotor of such an induction torque motor further includes the circular ring members formed of a relatively good conductor, a flow path of the eddy current can be more reliably provided at either end of the rotor for an induction torque motor and, thus, the eddy current is allowed to more efficiently flow. As a result, an excellent performance can be provided.

The induction torque motor includes a stator and a rotor. The rotor is any one of the above-described rotors for an induction torque motor.

Since such an induction torque motor includes a rotor having a cylindrical member made of a soft magnetic material having a specific electric resistivity lower than or equal to 0.4 [$\mu\Omega$•m] and a relative permeability higher than or equal to 1000 and lower than or equal to 50000, the performance of an induction torque motor including the rotor for an induction torque motor can be more improved than that of an induction torque motor having a rotor including a cylindrical member made of another soft magnetic material.

Although the present invention has been fully described in connection with the preferred embodiment thereof with reference to the accompanying drawings, it is to be noted that various changes and modifications are apparent to those skilled in the art.

Industrial Applicability

According to the present invention, a rotor for an induction torque motor and an induction torque motor using the rotor for an induction torque motor can be provided.

**Claims**

1. An induction torque motor, TM, comprising:

   a stator (2); and
   a rotor (1),
   the rotor comprising:

      a shaft member (1a); and
      a cylindrical member (1b) concentrically connected to the shaft member (1a), the cylindrical member (1b) being formed of a soft magnetic material having a specific electric resistivity lower than or equal to 0.4 $\mu\Omega \cdot$m and a relative permeability higher than or equal to 1000 and lower than or equal to 50000,

   wherein: let T be the torque of the induction torque motor, TM, in N·m, let P be the eddy current loss of the rotor (1) in W/kg, let s be the slip of the induction torque motor, TM, let $f_0$ be the drive frequency of the induction torque motor, TM, in Hz, let $\rho$ be the specific electric resistivity of the soft magnetic material in $\mu\Omega \cdot$m, let $\mu$ be the relative permeability of the soft magnetic material, and let $\delta(sf_0)$ be the skin depth of the cylindrical member (1b) at a drive frequency of $f_0$ in m, and
   when a symbol oc in a mathematical statement "A oc B" indicates that A is proportional to B, the torque T per "loss P/slip $sf_0$" is defined as:

   $$T/(P/sf_0) \propto 1/(1 + a/\mu)\cdot(\delta(sf_0)/\rho)$$

   the parameter a in the previous equation is inversely proportional to a distance G between the outer peripheral surface of the cylindrical member (1b) of the rotor (1) and the inner peripheral surface of the stator (2),
   the induction torque motor, TM, being **characterized in that** the distance G is in a range 0.1 mm $\leq$ G $\leq$ 0.15 mm defining the parameter a as being in the range 1000 $\leq$ a $\leq$ 2500.

2. The induction torque motor, TM, according to Claim 1, wherein the cylindrical member (1b) further includes a plurality of concave groove portions (11) that are formed in a peripheral surface of the cylindrical member (1b) and that extend parallel to the axis direction of the cylindrical member (1b).

3. The induction torque motor, TM, according to Claim 2, wherein the depth of each of the concave groove portions (11) is greater than or equal to the skin depth $\delta(sf_0)$ at a drive frequency of the induction torque motor, TM, of 60 Hz or 1 kHz, and an aspect ratio defined by the depth/the width is greater than or equal to 2, the width being a width of each of the concave groove portions (11).

4. The induction torque motor, TM, according to Claim 1, further comprising: a pair of circular ring members (12-1, 12-2) formed of a conductive material having a specific electric resistivity lower than or equal to 0.02 $\mu\Omega\cdot$m, the ring members (12-1, 12-2) being disposed along the circumferential edges at either end of the cylindrical member (1b) in the axis direction.

**Patentansprüche**

1. Induktionsdrehmomentmotor, TM, umfassend:

   einen Stator (2); und
   einen Rotor (1),
   wobei der Rotor umfasst:

   ein Wellenelement (la); und
   ein zylindrisches Element (1b), das konzentrisch mit dem Wellenelement (la) verbunden ist, wobei das zylindrische Element (1b) aus einem weichmagnetischen Material gebildet ist, das einen spezifischen elektrischen Widerstand von niedriger oder gleich 0,4 $\mu\Omega\cdot$m und eine relative Permeabilität von höher oder gleich 1000 und niedriger oder gleich 50000 aufweist,
   wobei: T das Drehmoment des Induktionsdrehmomentmotors, TM, in N·m sei, P der Wirbelstromverlust des Rotors (1) in W/kg sei, s der Schlupf des Induktionsdrehmomentmotors, TM, sei, $f_0$ die Antriebsfrequenz des Induktionsdrehmomentmotors, TM, in Hz sei, p der spezifische elektrische Widerstand des weichmagnetischen Materials in $\mu\Omega\cdot$m sei, $\mu$ die relative Permeabilität des weichmagnetischen Materials sei und $\delta(sf_0)$ die Eindringtiefe des zylindrischen Elements (1b) bei einer Antriebsfrequenz von $f_0$ in m sei, und wenn ein Symbol $\propto$ in einer mathematischen Aussage "A $\propto$ B" angibt, dass A proportional zu B ist, das Drehmoment T durch "Verlust P/Schlupf $sf_0$" definiert ist als:

   $$T/(P/sf_0) \propto 1/(1 + a/\mu)\cdot(\delta(sf_0/p)$$

   der Parameter a in der vorhergehenden Gleichung umgekehrt proportional zu einer Distanz G zwischen der äußeren Umfangsoberfläche des zylindrischen Elements (1b) des Rotors (1) und der inneren Umfangsoberfläche des Stators (2) ist,
   wobei der Induktionsdrehmomentmotor, TM, **dadurch gekennzeichnet ist, dass** die Distanz G in einem Bereich 0,1 mm $\leq$ G $\leq$ 0,15 mm liegt, der den Parameter a als in dem Bereich 1000 $\leq$ a $\leq$ 2500 liegend definiert.

2. Induktionsdrehmomentmotor, TM, nach Anspruch 1, wobei das zylindrische Element (1b) ferner eine Vielzahl von konkaven Rillenabschnitten (11) umfasst, die in einer Umfangsoberfläche des zylindrischen Elements (1b) gebildet sind und die sich parallel zu der Achsenrichtung des zylindrischen Elements (1b) erstrecken.

3. Induktionsdrehmomentmotor, TM, nach Anspruch 2, wobei die Tiefe von jedem der konkaven Rillenabschnitte (11) größer oder gleich der Eindringtiefe $\delta(sf_0)$ bei einer Antriebsfrequenz des Induktionsdrehmomentmotors, TM, von 60 Hz oder 1 kHz ist, und ein Seitenverhältnis, das durch die Tiefe/die Breite definiert ist, größer oder gleich 2 ist, wobei die Breite eine Breite von jedem der konkaven Rillenabschnitte (11) ist.

4. Induktionsdrehmomentmotor, TM, nach Anspruch 1, ferner umfassend:
   ein Paar kreisförmiger Ringelemente (12-1, 12-2), die aus einem leitfähigen Material gebildet sind, das einen spezifischen elektrischen Widerstand von niedriger oder gleich 0,02 $\mu\Omega\cdot$m aufweist, wobei die Ringelemente (12-1, 12-2) entlang der Umfangsränder an jedem Ende des zylindrischen Elements (1b) in der Achsenrichtung angeordnet sind.

**Revendications**

1. Moteur couple, TM, à induction comportant :

   un stator (2) ; et
   un rotor (1),
   le rotor comportant :

   un élément arbre (1a) ; et
   un élément cylindrique (1b) relié concentriquement à l'élément arbre (la), l'élément cylindrique (1b) étant formé d'un matériau magnétique souple ayant une résistivité électrique spécifique inférieure ou égale à 0,4 $\mu\Omega\cdot m$ et une perméabilité relative supérieure ou égale à 1 000 et inférieure ou égale à 50 000,
   dans lequel : soit T le couple du moteur couple, TM, à induction, en N·m, soit P la perte de courant de Foucault du rotor (1) en W/kg, soit s le glissement du moteur couple, TM, à induction, soit $f_0$ la fréquence d'attaque du moteur couple, TM, à induction en Hz, soit $\rho$ la résistivité électrique spécifique du matériau magnétique souple en $\mu\Omega\cdot m$, soit $\mu$ la perméabilité relative du matériau magnétique souple et soit $\delta(sf_0)$ la profondeur de peau de l'élément cylindrique (1b) à une fréquence d'attaque de $f_0$ en m et
   lorsqu'un symbole $\propto$ dans un énoncé mathématique « A $\propto$ B » indique que A est proportionnel à B, le couple T par « perte P/glissement $sf_0$ » est défini en tant que :

$$T/(P/sf_0) \propto 1/(1 + a/\mu)\cdot(\delta(sf_0)/\rho)$$

   le paramètre a dans la précédente équation est inversement proportionnel à une distance G entre la surface périphérique externe de l'élément cylindrique (1b) du rotor (1) et la surface périphérique interne du stator (2), le moteur couple, TM, à induction étant **caractérisé en ce que** la distance G est comprise dans une plage de 0,1 mm $\leq$ G $\leq$ 0,15 mm définissant le paramètre a comme étant compris dans la plage 1 000 $\leq$ a $\leq$ 2 500.

2. Moteur couple, TM, à induction selon la revendication 1, dans lequel l'élément cylindrique (1b) inclut en outre une pluralité de portions de rainure concave (11) qui sont formées dans une surface périphérique de l'élément cylindrique (1b) et qui s'étendent parallèlement à la direction d'axe de l'élément cylindrique (1b).

3. Moteur couple, TM, à induction selon la revendication 2, dans lequel la profondeur de chacune des portions de rainure concave (11) est supérieure ou égale à la profondeur de peau $\delta(sf_0)$ à une fréquence d'attaque du moteur couple, TM, à induction de 60 Hz ou 1 kHz et
   un rapport d'aspect défini par la profondeur/la largeur est supérieur ou égal à 2, la largeur étant une largeur de chacune des portions de rainure concave (11).

4. Moteur couple, TM, à induction selon la revendication 1, comportant en outre :
   une paire d'éléments en anneau (12-1, 12-2) circulaires formés d'un matériau conducteur ayant une résistivité électrique spécifique inférieure ou égale à 0,02 $\mu\Omega\cdot m$, les éléments en anneau (12-1, 12-2) étant disposés le long des bords circonférentiels à l'une ou l'autre extrémité de l'élément cylindrique (1b) dans la direction d'axe.

FIG. 1

TM

FIG. 2

# FIG. 3

FIG. 4

FIG. 5

## FIG. 6

EP 2 822 148 B1

# FIG. 7

FIG. 8

## FIG. 9

# FIG. 10

A

B

## FIG. 11

EP 2 822 148 B1

A

B

MECHANICAL ANGLE (ELECTRICAL ANGLE×1/2)

ROTATIONAL ANGLE (ELECTRICAL ANGLE×1/2)

# FIG. 12

EP 2 822 148 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006204012 A

- JP 2005348595 A